# EUROPEAN PATENT APPLICATION

(11) **EP 1 101 648 A2**
(43) Date of publication of application: **23.05.2001**
(21) Application number: 00110537.8
(22) Date of filing: 17.05.2000
(51) Int. Cl.: B60K 35/00

(54) **A method for displaying data relating to automatic speed and distance control in a vehicle**

(30) Priority: 19.11.1999 IT TO991017
(71) Applicant: FIAT AUTO S.p.A., 10135 Torino (IT)
(72) Inventor: Carrea, Paola, 10091 Alpignano (IT)
(74) Representative: Cerbaro, Elena, Dr.

(57) **Abstract**

The method includes the steps of: displaying a first image representing a motor car (40) seen from the rear; displaying a second image beneath the first image representing a level indicator (46) formed by a plurality of aligned strips (48) which can be illuminated selectively to give the driver of the vehicle information on the distance at which his vehicle is being kept and on all the other distances at which his vehicle could be kept from the vehicle in front; and displaying a composite closed line (44) a first portion (44a) of which surrounds the first image of a car (40) on three sides and a second portion (44b) of which surrounds the second image of a level indicator (46) so as to inform the driver that automatic speed and distance control is in operation.

## Description

The present invention relates to a method for displaying data relating to the operation of automatic speed and distance control in a vehicle.

Various devices are known in the art for controlling the speed and distance of a vehicle, commonly known as Adaptive Cruise Control devices, the object of which is automatically to control the acceleration and deceleration of a vehicle so that, in the absence of vehicles ahead, it travels at a cruise speed set by the driver; when approaching a vehicle in front, these control devices switch from automatic speed control to automatic distance control, maintaining the distance between the two vehicles in dependence on the speed of the said vehicles and the cruise conditions set by the driver and therefore accelerating or decelerating according to whether the difference between the distance from the obstacle and the set cruising distance is positive or negative.

Such devices are autonomous, that is they do not require communication between vehicles nor that other vehicles be equipped with a similar device, and are based on the use of a sensor device (radar, laser video-camera) positioned at the front of the vehicle for detecting traffic conditions in the region ahead of the vehicle itself.

With such control devices, the driver remains totally responsible for controlling the vehicle since each time he presses the brake or the accelerator pedal this overcomes the control action of the device.

In addition, the driver has a simple dashboard display providing a summary of the set cruise speed, the presence of a vehicle along the route ahead and the cruise distance maintained relative to the vehicle in front.

In addition, for safety reasons, in prior art automatic cruise control devices, the automatic speed and cruise distance control function can only be accessed once data relating to the cruise speed and distance have been entered, while without this data the control device may be switched on but will not operate.

Typically, the cruise speed may be selected from a plurality of discrete values ranging between a minimum value and a maximum value and spaced between these by predetermined intervals of, 5 or 10 km/h, for example.

In order to ensure that the safety distance from the vehicle in front is always observed, and since this safety distance depends on the cruise speed selected, prior art automatic control devices do not allow the driver to select at will the distance at which his vehicle is to be kept from the vehicle in front but only allows the driver to choose between a plurality of driving conditions indicative of longer or shorter distances relative to the vehicle in front.

In a few control devices, for example, the driver is able to choose between three driving conditions, in the first of which the vehicle will be kept at the safety distance (SPORT condition) from the vehicle in front, in the second of which the vehicle will be kept at a greater distance from the vehicle in front than the safety distance (NORMAL condition) and in the third of which the vehicle will be kept at a much greater distance from the vehicle in front than the safety distance (COMFORT condition).

Once the values of the cruise speed and driving conditions have been entered, the control device operates in such a way that if no other vehicle is detected in the path of the vehicle, the control device maintains the set cruise speed, while if a vehicle is detected in its path, the control device ensures automatically that it keeps its distance as determined by the selected driving condition.

In addition, each time the driver presses on the brake pedal to reduce speed, this overrides the automatic speed and distance control and when the driver takes his foot off the pedal, the control device does not resume automatic speed and distance control but remains switched on but not operative. Automatic speed and distance control can only be resumed by entering new cruise speed and distance values or by re-entering those set previously.

Each time the drive presses on the brake pedal, this also interrupts the display of data relating to the presence of a vehicle on the road ahead or the distance at which the vehicle is being kept from that in front, and this data is transmitted again only when the automatic control device resumes automatic speed and distance control.

On the other hand, each time the driver presses on the accelerator pedal to increase the speed of the vehicle, this only overrides the automatic speed and distance control temporarily to allow the set cruise speed to be exceeded and once the driver takes his foot off the pedal the control device automatically returns the vehicle to the set speed.

During a period in which the vehicle is once again manually controlled, the display of data relating to the presence of another vehicle and to the distance at which the vehicle is being kept from that in front is interrupted and the driver is alerted to this temporary return to manual control by, for example, a flashing of the cruise speed indicator.

Automatic speed control devices of the type described above are particularly advantageous both from the point of view of comfortable driving and of safety since they relieve the driver from having to adapt the speed of the vehicle to traffic conditions and keep the vehicle at a sufficient distance from that in front. From a point of view of economy and driving efficiency, this translates into a reduction in fuel consumption and a better flow of traffic, thanks to the automatic speed control.

However, prior art devices have a disadvantage with regard to the type of data supplied to the driver on the operating status of the devices themselves.

In particular, in known control devices, the driver is informed in real time of the cruise speed being maintained and the distance from the vehicle in front, but not of the possibilities of interaction with the control device itself, meaning that the driver often intervenes on the control device to attempt, for example, to select a driving condition which would take the vehicle to the safety distance from that in front, when in fact this is already the driving condition that has been set.

The object of the present invention is to provide a method of displaying data relating to the automatic speed and distance control function which overcomes the limitations of known control devices.

This object is achieved according to the present invention by providing a method for displaying data relating to an automatic control function of the speed and distance of a vehicle, characterised in that it includes a step of simultaneously displaying data relating both to a driving condition selected by the driver and to all the other driving conditions that the driver could select.

In this way, the driver is constantly informed not only of the distance at which his vehicle is being kept from the one in front but also of all possible interactions with the control device so as to alter this distance.

In order better to understand the present invention, a preferred embodiment thereof will now be described, purely by way of non-limitative example and with reference to the appended drawings, in which:
Figure 1 schematically illustrates part of the passenger compartment of a vehicle fitted with a control device according to the present invention;
Figure 2 is a block diagram of the automatic control device of Figure 1; and
Figures 3a, 3b, 3c and 3d show icons, drawn up according to the present invention, relating to an automatic speed and distance control function for display on a display unit forming part of the automatic control device of Figure 1.

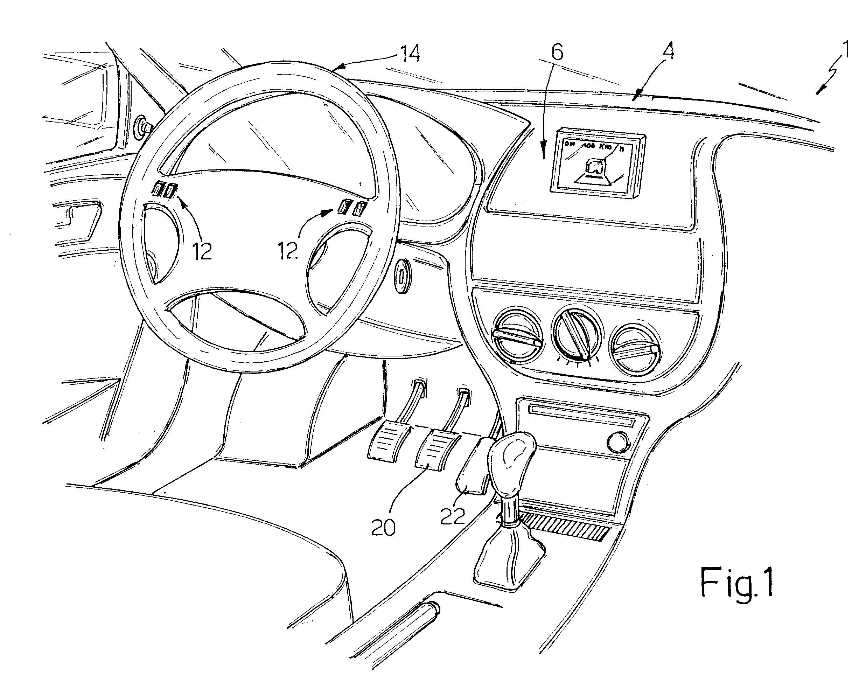

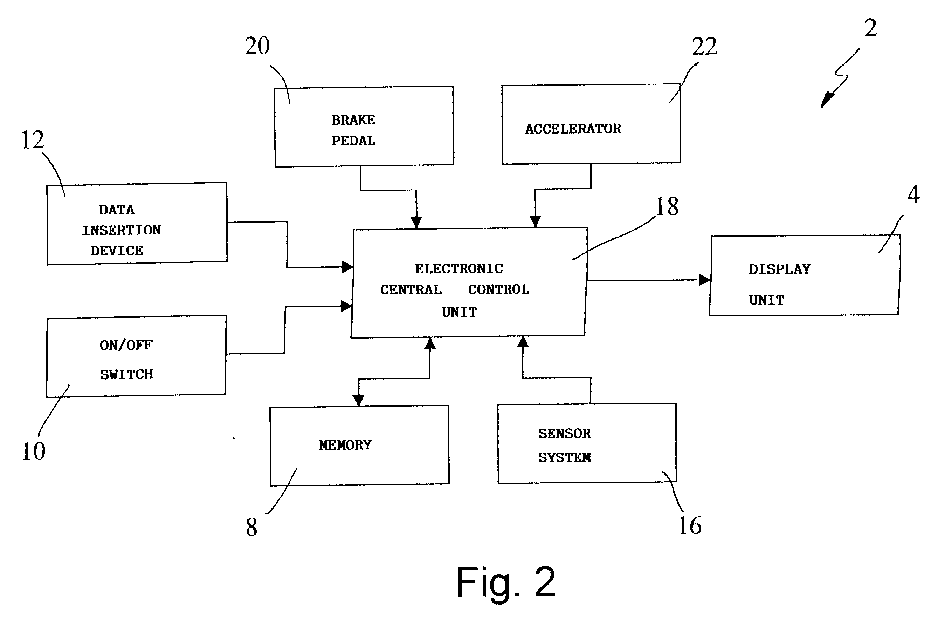

In Figure 1, part of a passenger compartment of a vehicle is indicated 1 and fitted with a device 2 for controlling the cruise speed and proximity of a vehicle according to the present invention, the overall block diagram of which is shown in Figure 2.

In particular, Figures 1 and 2 show only the parts of the control device 2 which are necessary to understand the present invention; for a more detailed description of a speed control device for a vehicle see, for example, European Patent Application EP-A-661 188 by the same Applicant.

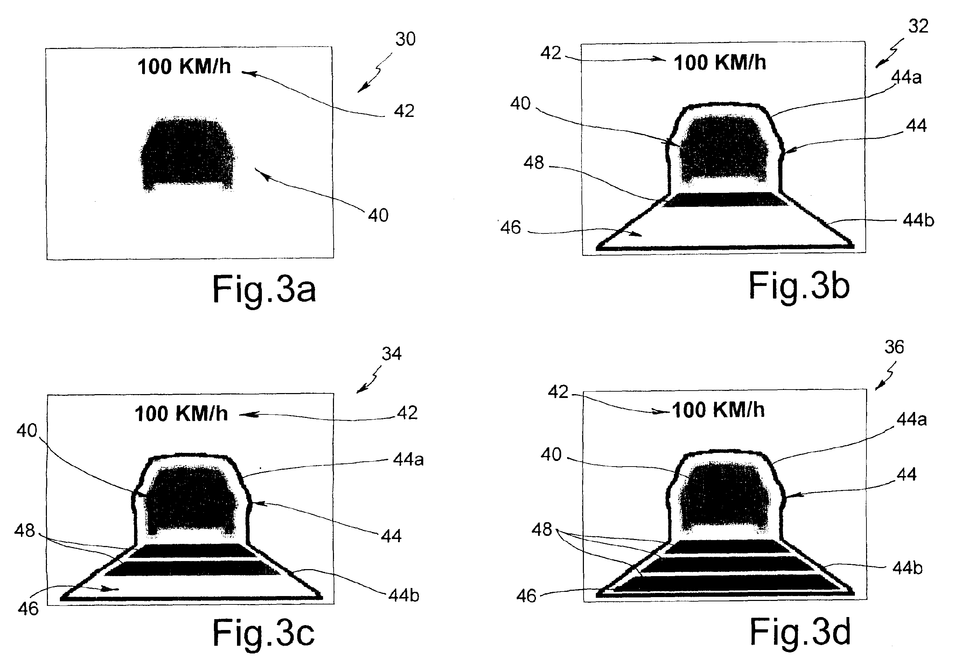

With reference to Figures 1 and 2, the control device 2 essentially includes a liquid crystal display unit 4, for example arranged on the dashboard 6 of the vehicle so as to be easily viewed by the driver, or in the centre of the instrument panel, and on which data relating to the cruise speed selected by the driver, the presence or absence of another vehicle on the road ahead and the distance at which the vehicle is being kept from that ahead are displayed; a memory 8 (see Figure 2) on which data relating to the cruise speed and distance set by the driver in the last selection operation are stored, an on/off button 10 for controlling the switching on or off of the device 2; a device 12 for entering data for setting the cruise speed and the cruise distance at which the vehicle must be kept from that in front and for controlling other functions, as will be described in greater detail below; a sensor device 16 (see Figure 2) arranged in the front portion of the vehicle to monitor traffic conditions in the area ahead of the vehicle itself; and an electronic control unit 18 (see Figure 2) connected to the display unit 4, the memory 8, the on/off switch 10, the data-entering device 12, the radar system 16 and the brake pedal 20 and accelerator pedal 22, operable to control the fuel injection system and the braking system of the vehicle (not shown in the drawings) so as automatically to control the cruise speed of the vehicle and its distance from the vehicle in front by implementing the operations described hereinafter with reference to the flow diagram shown in Figures 3a and 3b.

In particular, the data-entry device 12 can be implemented in various ways, for example by providing a plurality of keys positioned ergonomically on the steering wheel 14 of the vehicle and operable to allow activation of the data-entry function, an increase or decrease of the cruising speed, the setting of the cruising distance to be kept from the vehicle in front and the recall from the memory 8 of the last data entered.

The display unit 4 has a substantially rectangular display area in which different icons are displayed relating to the automatic speed and distance control function and designed according to the present invention.

Figures 3a-3d show in detail examples of icons designed according to the present invention.

In particular, Figure 3a shows a first icon, indicated 30, which is displayed on the display unit 4 to signal the presence of an obstacle to the driver, while Figures 3b, 3c and 3d show second, third and fourth icons, indicated 32, 34 and 36 which are displayed on the unit 4 to signal to the driver that the automatic control device 2 is operating the automatic distance control function.

In particular, the first icon 30 is constituted by a first two-dimensional image showing a car, indicated 40, viewed from the rear, with above it the value, indicated 42, of the cruising speed being maintained by the automatic control device 2.

In addition to the rear view of a car 40 shown in icon 30 the second, third and fourth icons include a second image consisting of a closed combined line, indicated 44, a first, upper portion 44a of which surrounds the car image 40 on three sides so as to give the driver the sensation that the car in front has been "caught", that is that the automatic control device 2 is automatically controlling the distance, while a second, lower portion, indicated 44b, substantially forms an isosceles trapezium enclosing a level indicator, indicated 46, formed by a plurality of horizontal strips arranged vertically one above the other and which can be illuminated selectively to indicated both the driving condition at which the vehicle is being kept relative to the one in front and all the other driving conditions in which the vehicle may be kept.

In particular, in the second icon 32 a single strip 48 is illuminated and this icon 32 indicates that the vehicle being controlled will be kept at the shortest possible distance from the vehicle in front in dependence on the speed of the said controlled vehicle, that is at the safety distance (SPORT condition); in the third icon 34, two strips 48 are illuminated, indicating that the controlled vehicle will be kept at an intermediate distance from the vehicle in front, greater than the safety distance (NORMAL condition); while in the third icon 36 all three strips are illuminated, indicating that the vehicle being controlled will be kept at a greater distance from the vehicle in front than the aforesaid intermediate distance (COMFORT condition).

By using the icons described above, it is thus possible to give the driver not only the data on cruising speed and distance already provided by those automatic control devices 2 known in the art, on the presence of a vehicle in front, but also information relating to possible interaction with the automatic control device 2 itself.

In fact, when the second icon 32 is displayed, the fact that a single strip 48 is illuminated tells the driver not only that the driving condition has been selected whereby the vehicle is kept at the safety distance (distance data) but also that it is possible to select two further driving conditions which would enable the vehicle to be kept at greater distances than the safety distance (data on possible interaction with the automatic control device 2).

This also applies to the third icon 34, in which the two illuminated strips 48 tell the driver that the driving condition has been selected in which the vehicle is being kept at an intermediate distance from that in front, but also that it is possible to select two further driving conditions, which enable the vehicle to be kept at the safety distance or at an even greater distance, respectively, and also for the fourth icon 36 in which all three strips are illuminated, informing the driver that the driving condition has been selected which enables the vehicle to be kept at the maximum distance from that in front, but also that it is possible to select two other driving conditions, enabling the vehicle to be kept at the safety distance or at an intermediate distance between this and the one currently selected.

Examination of the characteristics of the display method of the present invention clearly demonstrates the advantages that it provides.

Furthermore, it is clear that numerous modifications and variations may be made to the icons described above for supplying the driver, in addition to the data already relayed by known automatic control devices, also with data on the possibility of interacting with the automatic control device 2, without departing thereby from the scope of the present invention.

For example, the image of the car 40 could be different from that illustrated, being of a three-dimensional type, for example, or could be of a motor vehicle other than a car, or could be an image of a motor vehicle seen from other viewpoints than that described, above, for example; the composite closed outline 44 could be omitted and the data relating to the vehicle in front being "caught" could be supplied directly by the presence of the level indicator 46, which itself could be different from that shown, being of a three-dimensional type, for example or having a different number of strips from that shown.

In addition, data relating to the selected driving condition and data relating to the other possible driving conditions could be supplied in a different way to that described. For example, instead of the level indicator 46, abbreviations such as "MIN", "INT" and "MAX" could be displayed, or "1/3", "2/3" and "3/3", relating to maintaining the minimum distance ("MIN" or "1/3"), the intermediate distance ("INT" or "2/3") or the maximum distance ("MAX" or "3/3") respectively.

## Claims

1. A method for displaying data relating to the automatic speed and distance control function in a vehicle, characterised in that it includes the step of simultaneously displaying data relating both to a selected driving condition and to all the other driving conditions which could be selected by the driver.

2. A method according to Claim 1, characterised in that the said display step includes the steps of:
- displaying a first image representing a motor vehicle (40);
- displaying a second image (44a) indicating that automatic distance control is in operation;
- displaying a third image representing a level indicator (46) formed by a plurality of strips aligned with each other; and
- selectively illuminating the said strips (48) of the said level indicator (46) so as to give the driver of the vehicle information on the distance at which the vehicle is being maintained and all the other distances at which the vehicle could be maintained from the vehicle in front.

3. A method according to Claim 2, characterised in that the said third image representing a level indicator (46) is displayed beneath the said first image representing a motor vehicle (40).

4. A method according to Claim 2 or Claim 3, characterised in that the said step of displaying a second image (44a) indicating that automatic distance control is in operation comprises the step of:
- displaying a line (44) at least partially surrounding the said first image of a motor vehicle (40).

5. A method according to Claim 4, characterised in that the said step of displaying a line (44) comprises the step of:
- displaying a composite closed line (44), a first portion (44a) of which surrounds on three sides the said first image of a motor vehicle (40) and a second portion (44b) of which surrounds the said second image representing a level indicator (46).

6. A method according to Claim 5, characterised in that, the said first portion (44a) of the said line (44) has, along three sides of the said first image (40), the same shape as the outline of the said motor vehicle.

7. A method according to Claim 5 or Claim 6, characterised in that the said second portion (44b) of the said line (44) is substantially the shape of an isosceles triangle.

8. A method according to any preceding Claim, characterised in that the said first image (40) represents a motor vehicle seen from the rear.

9. A method according to any preceding Claim, characterised in that the said first image (40) is a two-dimensional representation of a motor vehicle.

10. A method according to any preceding Claim, characterised in that the said first image (40) represents a motor car.

11. A method according to any preceding Claim, characterised in that it also comprises the step of:
- displaying the speed of the said motor vehicle.
